# EUROPEAN PATENT SPECIFICATION

(11) **EP 0 575 011 B1**
(45) Date of publication and mention of the grant of the patent: **11.09.1996**
(21) Application number: 93201745.2
(22) Date of filing: 17.06.1993
(51) Int. Cl.: B01D 53/84

(54) **Device for biological purification of a gas**
Vorrichtung zur biologischen Reinigung eines Gases
Dispositif pour la purification biologique d'un gaz

(30) Priority: 17.06.1992 NL 9201067
(43) Date of publication of application: 22.12.1993
(73) Proprietor: TAUW MILIEU B.V., NL-7400 AB Deventer (NL); RECTICEL B.V., 4040 OA Kesteren (NL)
(72) Inventor: Oosting, Reinder, NL-9406 HN Assen (NL); Urlings, Leonardus Gerardus C.M., NL-3871 TB Hoevelaken (NL)
(74) Representative: de Bruijn, Leendert C.

(56) References cited:
- DE-A- 3 423 285
- DE-A- 4 017 384
- DE-A- 4 112 983
- NL-A- 8 901 422

## Description

The invention relates to a device for the biological purification of a gas according to the preamble of Claim 1.

Such a device is known from DE-A1-4,017,384, which describes a biofilter in which the lamellae are disposed parallel to each other with a space between them. The gas to be purified flows between the lamellae and is treated by the micro-organisms present in a biomass on the lamellae. Caking of dirt and growth of the biomass causes the space between the lamellae to fill up. The flow resistance - and thus also the pressure drop - is consequently increased, with the result that the purification process is adversely affected, and the filter capacity decreases. In order to guarantee a certain filter capacity, the power of the propulsion means usually a ventilator must be increased in this case, which involves a higher energy consumption. The wiper elements proposed by DE-A1-4,017,384 for cleaning the surfaces of the lamellae have the disadvantage that the device must be taken out of service temporarily during cleaning. Besides, filling up of the spaces still occurs between the cleaning moments, so that the flow resistance increases during operation. Further the wiper elements require a lot of room, which increases the pressure drop.

DE-A-3,423,285 discloses a device in which the lamellae are fitted parallel to each other and at a distinct distance from each other. Here again, filling up takes place, with the result that the flow resistance and the pressure drop increase. Further, not any measure has been taken to keep control of the pressure drop.

The object of the present invention is to solve the above problems.

This object is achieved according to the invention in accordance with the characterising part of Claim 1. The distance between the individual lamellae is preferably less than 15 cm.

With a device according to the invention, if the flow resistance - and thus also the pressure drop - increases through, for example, dirt caking or biomass growth, it is possible to increase the distance between the lamellae, thus reducing the flow resistance, and thus also the pressure drop. In this way it is possible to keep the pressure drop virtually constant at a value of less than 40 Pa/m.

With the device according to the invention it is also possible to reduce the distance between the lamellae, in order thereby to make the pressure drop greater. This may be a good idea if, for example, the pressure drop has fallen as a result of external influences, for example a change in the temperature and humidity of the gas to be purified. For, a reduction in the pressure drop may in some circumstances adversely affect the efficiency of the purification process.

In one embodiment according to the invention, the means for adjusting the distance between the individual lamellae comprise an essentially rod-shaped element, which is fixed to adjacent side edges of the lamellae in such a way that the distance between the individual lamellae can be adjusted by moving the rod-shaped element along said side edges. In this way the distance between the lamellae can be adjusted by very simple means.

In another embodiment according to the invention, adjacent lamellae are interconnected by means of two connecting elements, which are hingedly connected to each other by their one end and are each hingedly connected by their other end to one of the lamellae, in such a way that the distance between the individual lamellae can be adjusted by moving the hinged connection between two connecting elements.

In yet another embodiment according to the invention, the means for adjusting the distance between the individual lamellae comprise elements being slidable in and out, for example cylinder-piston units, which are disposed between the lamellae.

For good functioning of the device according to the invention, it is very advantageous if sealing means are fitted between the lamellae and the inside walls of the container, in such a way that the gas to be purified is guided through and/or along the lamellae. Such sealing means can be fitted, for example, between the outermost lamellae and the inside walls of the container and between the sides of the individual lamellae.

The sealing means between the outermost lamellae and the inside walls of the container ensure that when the space between the individual lamellae is reduced, the free space between the outermost lamellae and the inside walls of the container does not increase, with the result that the improved flow at these sides could compensate for the increase in the flow resistance between the lamellae. Conversely, it is obvious that when there is an increase in the distance between the individual lamellae, these sealing means allow the outermost lamellae to move outwards towards the wall of the container, and in so doing regulate the flow resistance between the outermost lamellae and the wall in such a way that they do not adversely affect the regulation of the pressure drop.

These sealing means are advantageously flexible or elastic. This means that said sealing means can move easily along with the lamellae, without the movement of the lamellae being essentially impeded, while the sealing action is retained.

According to a further preferred embodiment according to the invention, it comprises means for adjusting the angular position of the lamella faces relative to the gas flow. Gas flow in this case is understood to mean the direction in which the gas flows through the container, in other words, if, for example, the gas enters an upright cylinder somewhere at the bottom and leaves said cylinder somewhere at the top, then the gas flow is vertically upwards. In this way it is possible to optimise the pressure drop and the flow through the lamellae by altering the angular position of the lamella faces relative to the gas flow. The initial position of the lamellae is preferably such in this case that the gas flow is essentially parallel to the lamella faces. By altering the angular position of the lamella faces, the gas flow will then flow more or less through the lamellae and/or the contact of the gas flow with the lamellae will be more or less intensive.

This angular position between the lamella faces and the gas flow can preferably be adjusted between 0° and 45°, and 45° may be positive in one direction and negative in the other direction.

It is also very advantageous if in the case of the device according to the invention the lamellae are made of a spongy compressible material and compression means are present for compressing the lamellae. With the aid of said compression means it is possible to regenerate the spongy packing material from which the lamellae are preferably made. In this case the lamellae are compressed by means of the compression means, with the result that the lamellae are, as it were, squeezed out like a sponge, so that biomass and dirt can be flushed out of the lamellae. The cause of the increase in flow resistance is simply removed in this way. The means for adjusting the distance between the individual lamellae are in this case designed in such a way that they are also suitable for use as pressure means.

The lamellae preferably have an embossed main surface, such as an eggshell or rectangular crenellated profile. In this way the contact surface of the lamellae is increased, which has a beneficial effect on the purifying action, and the flow pattern of the gas flow is also influenced by, for example, introduction of turbulence, which is beneficial for mass transfer.

For a further improvement of the purifying action of the lamellae it has been found very advantageous to use lamellae which are made of plastic foam, in particular material such as that defined in Dutch Patent Application 8901422, for example reticulated polyurethane. The material to be used for the lamellae has preferably a porosity of 95-98%, a density of 20-24 kg/m³ and a surface area specifically available for purification of 500-4000 m²/m³. A large contact surface is achieved with such a material for the lamellae. Such a material is also readily compressible, which facilitates the regeneration.

For the purifying action of the device it is also very advantageous if the surface of the lamellae is chemically modified in such a way that the affinity with the desired micro-organisms and/or the matter to be removed from the gas flow increases.

For a good purification, such a device comprises means for flushing the lamellae with a washing liquid, said means collecting the washing liquid after the flushing and then by means of recirculation flushing the lamellae again with the collected washing liquid. It is also very advantageous according to the invention in the case of high charges if said means comprise in addition a water purification unit for purifying the washing liquid before flushing the lamellae again with it. This makes it possible to remove components entrained by the washing liquid from said liquid.

According to a further preferred embodiment, the device according to the invention comprises feed means for adding specially adapted micro-organisms. This makes it possible, for example, if the pollution in the gas to be purified changes composition, to add to the device according to the invention micro-organisms which can cope well with the newly arrived pollution components.

It is pointed out that within the scope of the invention an average person skilled in the art will be able to think of many means for adjusting the distance between the individual lamellae, for adjusting the angular position of the lamellae, for compressing the lamellae etc.

The invention also relates to a method for biological purification of a gas using a device according to the invention.

The invention will now be explained in greater detail below by a number of examples with reference to a drawing, in which:
Figure 1 shows a diagrammatic view of a device according to the invention for the biological purification of a gas;
Figure 2 shows a diagrammatic view in perspective of a detail of an embodiment of a device according to the invention;
Figure 3 shows a diagrammatic side view of a number of lamellae with a different embodiment of the means for adjusting the distance between the lamellae;
Figure 4 shows a view corresponding to that of Figure 3, in which the lamellae are moved towards each other; and
Figure 5 and Figure 6 show results of experiments.

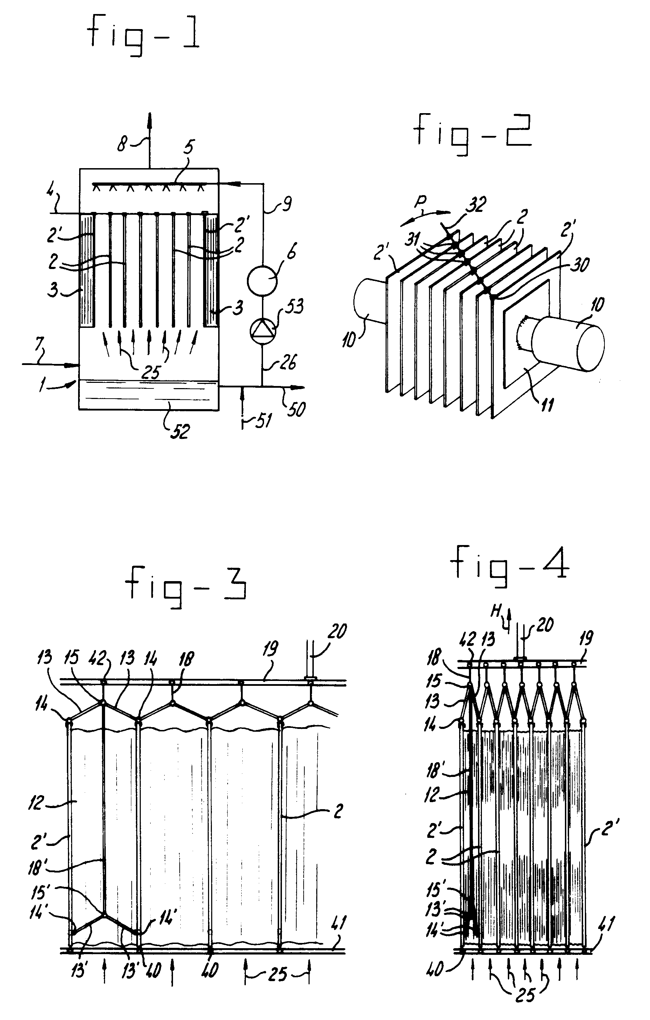

Figure 1 shows a container 1, in which lamellae 2 and 2', for example of reticulated polyurethane foam, are arranged by means of a frame (not shown). The lamellae 2 and 2' are fixed in the frame in such a way that they can move towards and away from each other by means of, for example, small wheels running in guide rails. This can also be achieved in many other ways which are known per se.

Gas to be purified is fed into the container 1 from the bottom through 7. Said gas (arrows 25) flows upwards in the container, partially between the lamellae 2 and 2' and partially through the lamellae 2 and 2' themselves, and is then discharged again in purified form through 8. The gas is purified by means of a biomass present on the lamellae.

In order to improve the purifying action of the device, the lamellae 2 and 2' are flushed by washing liquid sprayed onto the lamellae 2 and 2' by means of spray means 5. At the bottom of the container 1 the washing liquid 52 present therein is discharged from the container again through pipe 26 by means of a pump 53. The washing liquid is then pumped to a water purification unit 6. and is subsequently fed through pipe 9 back to the spray means 5. The components entrained by the washing liquid are removed from it by the micro-organisms on the lamellae 2 and 2', and if necessary also by the micro-organisms in the water purification unit 6. It is pointed out that the direction of flow (i.e. the direction in which the gas flows through the container, so vertically upwards in Figure 1) of the gas relative to that of the washing liquid can also be different from the opposite direction shown in Figure 1. The direction of flow of the gas can be, for example, the same as that of the washing liquid (co-current) or they can also be e.g. perpendicular to each other, or counter-current to each other.

Figure 1 also shows a rod 4 projecting from the container 1, by means of which (as will be described in greater detail later with reference to Figure 2 for one embodiment and with reference to Figures 3 and 4 for another embodiment) the distance between the individual lamellae 2 and 2' can be adjusted. The lamellae 2 and 2' are then moved towards each other or away from each other by moving the rod 4 to and fro and, as will emerge further on, according to the embodiment of Figure 2, to and fro is perpendicular to the plane of the drawing, and according to the embodiment of Figures 3 and 4, to and fro is vertically up and down. The purpose of the sealing means 3 between the outermost lamellae 2' and the inside wall of the container 1 is to provide a permanent seal for the increasing or decreasing space between the outermost lamellae 2' and the inside wall of the container 1 when the lamellae 2 and 2' are moved towards or away from each other. Said sealing means 3 can be, for example, flexible harmonica-type bellows constructions.

As shown in Figure 1, the example of a device according to the invention shown diagrammatically here also has supply means 51 and discharge means 50. These supply and discharge means 51 and 50, respectively, are shown here at pipe 26, but they can just as easily be provided at other points. The discharge means 50 can be used for, for example, taking samples or for draining off the washing liquid. The supply means (51) can be used for, for example, supplying new washing liquid or auxiliary materials for the purification process. It is, for example, very advantageous to add specially adapted micro-organisms to the washing liquid through these supply means.

Figure 2 shows a detail of Figure 1, in which according to one embodiment of the invention it is shown how the distance between the lamellae 2 and 2' can be adjusted, and also how the lamellae 2 and 2' can be compressed.

The rod 4 is hingedly connected by its one end at 30 to one of the outermost lamellae 2'. The rod 4 is connected to the remaining lamellae 2 and 2' by means of pin and slot connections 31. If the rod 4 is now swung to and fro at its other end 32 in the direction of the double arrow P, the lamellae 2 and 2' are moved towards or away from each other. It is again pointed out here that the lamellae 2 and 2' are in this case held parallel to each other by means of the frame (not shown), in which they are disposed in such a way that they can move towards and away from each other by means of, for example, small wheels running in rails.

Figure 2 also shows compression means 10, 11, by which the lamellae 2 and 2' can be compressed, which is extremely advantageous if the lamellae 2 and 2' consist of a spongy compressible material. In this way it is in fact possible to remove the dirt and the biomass from the lamellae 2 and 2'. These compression means comprise, for example, two pressure plates 11, which are fitted at the side of the wall of the container 1 on each of the outermost lamellae 2', and two cylinder-piston units 10, which are fitted between said pressure plates 11 and the inside wall of the container 1. The lamellae 2 and 2' are then compressed and, as it were, squeezed out by sliding out said cylinder-piston units 10.

Figures 3 and 4 show diagrammatically a view of a detail of another embodiment of a device according to the invention. These figures show a different way in which the distance between the individual lamellae 2 and/or 2' can be adjusted. Lamellae 2 and/or 2' lying adjacent to each other are interconnected here at the top side of the lamellae by means of two connecting elements 13, which are hingedly connected by their one end to each other at point 15, and are each hingedly connected by their other end to one of the lamellae 2 or 2' at the points 14. In a corresponding way the lamellae are interconnected at their bottom side by means of two connecting elements 13', which are hingedly connected to each other by their one end at point 15', and are each hingedly connected by their other end to one of the lamellae 2 or 2' at the points 14'. The latter connecting elements 13', of which only one pair is shown, are connected to the connecting elements 13 by means of connecting rods 18' (of which again only one is shown), fitted between the points 15 and 15', in such a way that moving the hinged connection 15 between two connecting elements 13 changes the distance between the two particular lamellae 2 or 2 and 2' lying adjacent to each other. In order to ensure that the lamellae 2 and/or 2' cannot be lifted up when, for example, a point 15 moves upwards, they are provided at the underside with small wheels 40, which can move to and fro in the horizontal direction in guide rail 41.

In order to be able to make all lamellae 2 and 2' move simultaneously to the same extent towards or away from each other, the hinged connections 15 are each connected to one end of a connecting piece 18, which with its other end can run along a guide rail 43 by means of a small wheel 42. The distance between the individual lamellae is reduced or increased by now moving guide rail 19 up or down by means of an only partially shown lever system 20 by means of, for example, rod 4 (Figure 1). Figure 3 here shows a position in which the distance between the lamellae 2 and/or 2' is relatively great, while Figure 4 shows a position in which guide rail 19 is moved up in the direction of arrow H, with the result that the distance between the individual lamellae 2 and/or 2' is relatively small. It will be clear that the means (13, 13', 18, 18') just described for adjusting the distance between the individual lamellae, apart from being provided on both sides outside the lamellae in the way just described, can also be provided at many other points, for example halfway between the lamellae or at both sides between the lamellae.

Figures 3 and 4 show the gas flow by means of the arrows 25. In order to ensure that the gas is guided through between the lamellae 2 and 2', it is very advantageous to provide sealing means 12 at the sides of the lamellae 2 and 2', which sealing means connect said sides of the lamellae 2 and 2' to each other in a sealing manner. Said sealing means 12 can consist of, for example, a flexible harmonica-type bellows construction.

It will be clear that the present invention is in no way restricted to the examplary embodiments described above. For example, the following are also very possible:
- The device according to the invention shown in Figure 1 also can have means for adjusting the angular position of the lamella faces relative to the gas flow. This can be effected, for example, by mounting the frame (not shown) in which the lamellae 2 are fitted in the container 1 in such a way that said frame is rotatable about an axis at right angles to the plane of the drawing. By rotating the frame about said axis at right angles to the plane of the drawing, the angular position of the lamella faces relative to the gas flow is then changed. Said angular position can preferably be changed from 0° (as shown in the diagrammatic illustration of Figure 1) to 45°.
- In Figures 3 and 4, the connecting pieces 18 can be omitted and the wheels 42 fitted directly on the hinged connections 15. This in no way changes the operation of the whole unit. The hinged connections 15 and 15' can also be moved to and fro in a different way if desired.
- Several layers (with several lamellae placed parallel for each layer) can be placed one after the other. The angular position of the lamella faces relative to the gas flow can then be different for each layer, for example, alternately one layer 30°, the next layer -30°, the next layer 30°, the next layer again -30° etc.

However, many other modifications are also perfectly feasible within the scope of the present invention.

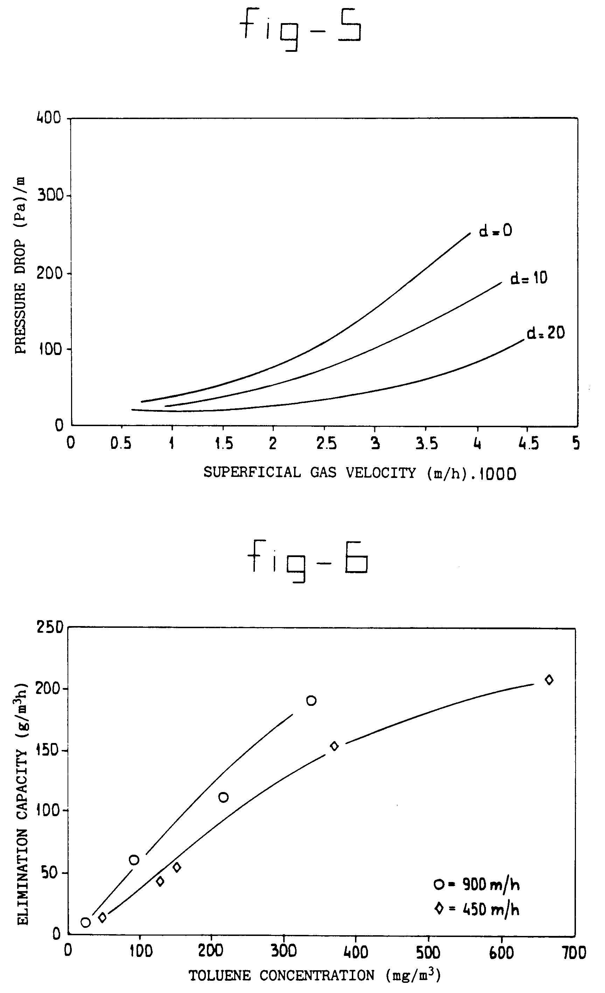

During experiments with a device according to the invention it was found that:
- The pressure drop per meter bed height increases with the gas velocity and decreases with a greater distance between the individual lamellae. Figure 5 shows an example of this in the case of lamellae with an eggshell profile, the lamella faces of which are parallel to the gas flow, thus lamella faces angle 0°, and the distance d between the lamellae is 0, 10 or 20 cm.
- The pressure drop depends on the lamella thickness. The pressure drop in the case of lamellae 2 cm thick is greater than in the case of lamellae 1 cm thick.
- The profile provided on the lamellae affects the pressure drop. For, by selecting a different profile, the roughness of the lamella surface is changed. The higher the profile, the greater the pressure drop. A rectangular profile gives a greater pressure drop than a more rounded type (for example, eggshell profile).

Experiments with toluene as the pollutant give purification efficiencies of 60% to 100% in the case of a device according to the invention. In two experiments the circumstances were as follows:
- position of lamella faces parallel to the gas flow, i.e. as shown in Figure 1;
- distance between lamella faces < 1 cm;
- polyurethane lamellae with eggshell profile;
- charged with washing liquid 2.8 metres per hour (m³/m²h=m/h), in countercurrent to the gas;
- gas charge 450 m/h and 900 m/h;
- inlet concentration of toluene in the gas varying between 20 and 800 mg/m³;
- inoculation with bacteria strains grown on toluene.

Figure 6 shows the results of these experiments. Table A gives an indication of the biological oxygen consumption (BOC) and chemical oxygen consumption (COC) measured in the water drained off, which in the case of the experiments was about 15 litres per day. These BOC and COC values give an indication of the costs of waste disposal.

**Table A**

| gas charge (m/h) | toluene concentration in gas supply (mg/m³) | BOC (mg O₂/l) | COC (mg O₂/l) | COC/BOC |
|---|---|---|---|---|
| 900 | 445 | 81 | 730 | 9 |
| 650 | 781 | 16 | 600 | 37.5 |

Experiments with the same device as that above, but with ammonia as the pollutant in the gas show how the relative concentration of the ammonia over the column height, i.e. over the lamella height, decreases at pH 5 and 9 respectively. In this case the gas charge was 1650 m/h, and the ammonia concentration in the gas fed in was 90 mg/m³. Table B shows some of the results of this.

**Table B**

| Column height in m | Rel. ammonia concentration in % with pH=9 | Rel. ammonia concentration in % with pH=5 |
|---|---|---|
| 0 | 1 | 1 |
| 0.5 | 0.51 | 0.35 |
| 1.2 | 0.24 | 0.12 |

## Claims

1. Device for biological purification of a gas, comprising lamellae used as support material for micro-organisms and/or for increasing the contact surface, which lamellae are arranged essentially parallel to each other in a container through which a gas to be purified flows, constructed in such a way that the lamella faces bound a throughflow path for gas, characterised in that the device comprises means for adjusting the distance between the individual lamellae.

2. Device according to Claim 1, characterised in that the distance between the individual lamellae (2, 2') is less than 15 cm.

3. Device according to Claim 1 or 2, characterised in that the means for adjusting the distance between the individual lamellae comprise an essentially rod-shaped element (4), which is fixed to adjacent side edges of the lamellae (2, 2') in such a way that the distance between the individual lamellae (2, 2') can be adjusted by moving the rod-shaped element along said side edges.

4. Device according to Claim 1 or 2, characterised in that adjacent lamellae (2, 2') are interconnected by means of two connecting elements (13), which are hingedly connected (15) to each other by their one end and are each hingedly connected (14) by their other end to one of the lamellae, in such a way that the distance between the individual lamellae (2 or 2 and 2') can be adjusted by moving the hinged connection (15) between two connecting elements (13).

5. Device according to one of the preceding claims, characterised in that the means for adjusting the distance comprise elements, which are slidable in and out, and disposed between the individual lamellae.

6. Device according to one of the preceding claims, characterised in that sealing means (3, 12) are fitted between the lamellae and the inside walls of the container, in such a way that the gas to be purified is guided through and/or along the lamellae.

7. Device according to Claim 6, characterised in that the sealing means (3, 12) are elastic or flexible.

8. Device according to one or more of the preceding claims, characterised in that it comprises means for adjusting the angular position of the lamella faces relative to the gas flow.

9. Device according to Claim 8, characterised in that the angular position can be adjusted between 0° and 45°.

10. Device according to one or more of the preceding claims, characterised in that the lamellae (2, 2') are made of a spongy compressible material provided with an embossed main surface, preferably reticulated polyurethane, and in that compression means (10, 11) are present for compressing the lamellae (2, 2').

11. Device according to one or more of the preceding claims, comprising means for flushing the lamellae with washing liquid, said means collecting the washing liquid after flushing the lamellae, and then flushing the lamellae again with the collected washing liquid, characterised in that said means (5, 9, 6, 26) further comprise a water purification unit (6) for purifying the washing liquid before flushing the lamellae (2, 2') again with it.

12. Device according to one or more of the preceding claims, characterised in that it comprises supply means (51) for adding specially adapted micro-organisms.

13. Method for biological purification of a gas, using a device according to one or more of the preceding claims.

## Patentansprüche

1. Vorrichtung zur biologischen Reinigung eines Gases, die Lamellen als Trägermaterial für Mikroorganismen und/oder zur Vergrößerung der Kontaktfläche besitzt, wobei die Lamellen in einem Behälter, durch den das zu reinigende Gas strömt, im wesentlichen parallel zueinander angeordnet und so ausgeführt sind, daß die Lamellenflächen einen Durchgang für das Gas bilden, dadurch gekennzeichnet, daß sie eine Einrichtung zum Verändern des Abstands zwischen den einzelnen Lamellen besitzt.

2. Vorrichtung gemäß Anspruch 1, dadurch gekennzeichnet, daß der Abstand zwischen den einzelnen Lamellen (2, 2') kleiner als 15 cm ist.

3. Vorrichtung gemäß Anspruch 1 oder 2, dadurch gekennzeichnet, daß die Einrichtung zum Verändern des Abstands zwischen den einzelnen Lamellen ein im wesentlichen stabförmiges Element (4) besitzt, das an den angrenzenden Seitenkanten der Lamellen (2, 2') so angebracht ist, daß der Abstand zwischen den einzelnen Lamellen (2, 2') durch Bewegen des stabförmigen Elements entlang dieser Seitenkanten verändert werden kann.

4. Vorrichtung gemäß Anspruch 1 oder 2, dadurch gekennzeichnet, daß benachbarte Lamellen (2, 2') durch zwei Verbindungselemente (13) miteinander verbunden sind, die an einem Ende (15) miteinander und am anderen Ende (14) jeweils mit einer der Lamellen gelenkig so verbunden sind, daß der Abstand zwischen den einzelnen Lamellen (2 oder 2 und 2') durch Bewegen der Gelenkverbindung (15) zwischen den beiden Verbindungselementen (13) verändert werden kann.

5. Vorrichtung gemäß einem der vorstehenden Ansprüche, dadurch gekennzeichnet, daß die Einrichtung zum Verändern des Abstands Elemente besitzt, die zusammengeschoben und auseinandergezogen werden können und zwischen den einzelnen Lamellen angeordnet sind.

6. Vorrichtung gemäß einem der vorstehenden Ansprüche, dadurch gekennzeichnet, daß Dichtungen (3, 12) zwischen den Lamellen und den Innenwänden des Behälters so angebracht sind, daß das zu reinigende Gas durch die Lamellen und/oder an den Lamellen entlang geleitet wird.

7. Vorrichtung gemäß Anspruch 6, dadurch gekennzeichnet, daß die Dichtungen (3, 12) elastisch oder flexibel sind.

8. Vorrichtung gemäß einem oder mehreren der vorstehenden Ansprüche, dadurch gekennzeichnet, daß sie eine Einrichtung zum Verändern der Winkelstellung der Lamellenflächen gegenüber dem Gasstrom besitzt.

9. Vorrichtung gemäß Anspruch 8, dadurch gekennzeichnet, daß die Winkelstellung zwischen 0° und 45° verändert werden kann.

10. Vorrichtung gemäß einem oder mehreren der vorstehenden Ansprüche, dadurch gekennzeichnet, daß die Lamellen (2, 2') aus einem schwammartigen zusammendrückbaren Material, vorzugsweise vernetzten Polyurethan, mit einer geprägten Hauptoberfläche bestehen und Kompressionsvorrichtungen (10, 11) zum Zusammendrücken der Lamellen (2, 2') vorhanden sind.

11. Vorrichtung gemäß einem oder mehreren der vorstehenden Ansprüche, die Vorrichtungen zum Spülen der Lamellen mit Waschflüssigkeit besitzt, wobei diese Vorrichtungen die Waschflüssigkeit nach dem Spülen der Lamellen auffangen und anschließend die Lamellen erneut mit der aufgefangenen Waschflüssigkeit spülen, dadurch gekennzeichnet, daß diese Vorrichtungen (5, 9, 6, 26) des weiteren mit einem Wasserreiniger (6) zum Reinigen der Waschflüssigkeit vor dem erneuten Spülen der Lamellen (2, 2') ausgestattet sind.

12. Vorrichtung gemäß einem oder mehreren der vorstehenden Ansprüche, dadurch gekennzeichnet, daß sie eine Zuführungsvorrichtung (51) für die Zuführung besonders angepaßter Mikroorganismen besitzt.

13. Verfahren zur biologischen Reinigung eines Gases, bei dem eine Vorrichtung gemäß einem oder mehreren der vorstehenden Ansprüche eingesetzt wird.

## Revendications

1. Dispositif de purification biologique d'un gaz, comportant des lamelles utilisées en tant que matériau de support de micro-organismes et/ou destinées à augmenter la surface de contact, lesquelles lamelles sont agencées essentiellement parallèlement l'une à l'autre dans un récipient à travers lequel s'écoule un gaz à purifier, construit de manière telle que les faces des lamelles délimitent un trajet d'écoulement traversant pour le gaz, caractérisé en ce que le dispositif comporte des moyens pour ajuster la distance existant entre les lamelles individuelles.

2. Dispositif selon la revendication 1, caractérisé en ce que la distance existant entre les lamelles individuelles (2, 2') est plus petite que 15 cm.

3. Dispositif selon la revendication 1 ou 2, caractérisé en ce que les moyens pour ajuster la distance existant entre les lamelles individuelles comporte un élément (4) ayant essentiellement la forme d'une tige, qui est fixé aux bords latéraux adjacents des lamelles (2, 2') de manière telle que la distance existant entre les lamelles individuelles (2, 2') peut être ajustée en déplaçant l'élément en forme de tige le long desdits bords latéraux.

4. Dispositif selon la revendication 1 ou 2, caractérisé en ce que des lamelles adjacentes (2, 2') sont reliées par l'intermédiaire de deux éléments de liaison (13), qui sont reliés de manière articulée (15) l'un à l'autre par leur première extrémité et sont chacun reliés de manière articulée (14), par leur autre extrémité, à une des lamelles, de telle sorte que la distance existant entre les lamelles individuelles (2 ou 2 et 2') peut être ajustée en déplaçant la liaison articulée (15) entre deux éléments de liaison (13).

5. Dispositif selon l'une quelconque des revendications précédentes, caractérisé en ce que les moyens pour ajuster la distance comportent des éléments qui peuvent coulisser vers l'intérieur et vers l'extérieur, et qui sont disposés entre les lamelles individuelles.

6. Dispositif selon l'une quelconque des revendications précédentes, caractérisé en ce que des moyens d'étanchéité (3, 12) sont agencés entre les lamelles et les parois intérieures du récipient, de telle sorte que le gaz à purifier soit guidé à travers et/ou le long des lamelles.

7. Dispositif selon la revendication 6, caractérisé en ce que les moyens d'étanchéité (3, 12) sont élastiques ou souples.

8. Dispositif selon une ou plusieurs des revendications précédentes, caractérisé en ce qu'il comporte des moyens pour ajuster la position angulaire des faces des lamelles par rapport à l'écoulement de gaz.

9. Dispositif selon la revendication 8, caractérisé en ce que la position angulaire peut être ajustée entre 0 et 45°.

10. Dispositif selon une ou plusieurs des revendications précédentes, caractérisé en ce que les lamelles (2, 2') sont constituées d'un matériau spongieux compressible muni d'une surface principale bosselée, de préférence du polyuréthanne réticulé, et en ce que des moyens de compression (10, 11) existent pour comprimer les lamelles (2, 2').

11. Dispositif selon une ou plusieurs des revendications précédentes, comportant des moyens pour nettoyer les lamelles par le liquide de lavage, lesdits moyens collectant le liquide de lavage après nettoyage des lamelles, et ensuite nettoyant à nouveau les lamelles par le liquide de lavage collecté, caractérisé en ce que lesdits moyens (5, 9, 6, 26) comportent en outre un ensemble de purification d'eau (6) destiné à purifier le liquide de lavage avant nettoyage à nouveau des lamelles (2, 2') par celui-ci.

12. Dispositif selon une ou plusieurs des revendications précédentes, caractérisé en ce qu'il comporte des moyens d'alimentation (51) pour ajouter des micro-organismes particulièrement adaptés.

13. Procédé de purification biologique d'un gaz, utilisant un dispositif selon une ou plusieurs des revendications précédentes.
